# EUROPEAN PATENT APPLICATION

(11) **EP 0 965 935 A2**
(43) Date of publication of application: **22.12.1999**
(21) Application number: 99304705.9
(22) Date of filing: 16.06.1999
(51) Int. Cl.: G06F 17/60

(54) **Processing electronic mail**

(30) Priority: 16.06.1998 JP 16795298
(71) Applicant: Sharp Kabushiki Kaisha, Osaka-shi, Osaka 545-8522 (JP)
(72) Inventor: Haneda, Isamu, Souraku-gun, Kyoto (JP); Kaneda, Toshitaka, Kashihara-shi, Nara (JP)
(74) Representative: Brown, Kenneth Richard

(57) **Abstract**

For a created mail message, information including whether the mail message demands a reply or not is stored so that, when a mail message is received from an external apparatus, whether or not the received mail message is a reply to a mail message that demands a reply is checked and, if so, the fact that the received mail message is a reply to a mail message that demands a reply is stored. The information thus stored is displayed in the form of a list. Moreover, whether or not there is a mail message that has not yet been transmitted is checked so that, if there is any, a warning is displayed to indicate that there is a mail message that has not yet been transmitted. When the user confirms the warning, the mail message that has not yet been transmitted is transmitted.

## Description

### BACKGROUND OF THE INVENTION

### Field of the Invention

The present invention relates to an electronic mail processing apparatus, an electronic mail processing method, and a recording medium having an electronic mail processing program stored therein, all for use in a personal computer, portable communications terminal, workstation, or the like, and particularly to a method for managing the reception/transmission status of electronic mail that needs to be answered and for handling electronic mail that has not yet been transmitted.

### Description of the Prior Art

In recent years, as electronic mail (hereafter also e-mail or simply mail) comes into wider and wider use, various techniques for handling e-mail have been proposed. Among others, many proposals have been made for managing the reception/transmission status of e-mail and for handling e-mail that has not yet been transmitted.

A few examples will be described below.
(1) According to the technique proposed in Japanese Laid-Open Patent Application No. H7-202934, when a mail message is created and transmitted, the deadline for a reply thereto is specified, and, on the deadline date, a reminder mail message requesting a reply thereto is automatically transmitted. In this way, a mail message for which a deadline for a reply is specified is followed up automatically.
(2) According to the technique proposed in Japanese Laid-Open Patent Application No. H7-143163, transmission of a mail message that needs to be transmitted with an intentional delay is reserved until a specified hour, and, at the specified hour, the mail message is automatically transmitted to its addressee.
(3) According to the technique proposed in Japanese Laid-Open Patent Application No. H9-205460, changes in regular transmissions, changes in the schedule of non-regular transmissions, and the like are reflected in a reserved data table secured in a reserved data table file, and, when a mail message is transmitted, the reserved data table is referred to. This helps relieve concentration of mail traffic on a yearly, half-yearly, or next-several-days basis and thereby minimize mail traffic and mail handling failure, making it possible to cope flexibly with changes in the transmission schedule.

However, even these e-mail handling techniques suffer from problems as noted below.

According to the technique (1) above, it is possible to transmit a reminder mail message with respect to a mail message that needs to be answered, but it is necessary to perform complicate operations to check whether a reply mail message has already been received or not. Thus, for example, there is a possibility that a reminder mail message is transmitted even to a person who has already transmitted a reply.

According to the technique (2) above, when a mail message is created, it is absolutely necessary to specify its transmission date and hour, and thus it is not possible to cope with a case where a mail message has been created but its transmission needs to be reserved for the moment. Moreover, since mail messages are transmitted with intentional delays, it is not possible to readily grasp, at a particular moment, which mail messages have already been transmitted.

According to the technique (3) above, when a mail message is created, it is absolutely necessary to specify its transmission date and hour, and thus it is not possible to cope with a case where a mail message has been created but its transmission needs to be reserved for the moment. Moreover, when the reservation of transmission of the mail message needs to be extended from the previously specified transmission date and hour, it is necessary to specify new transmission date and hour. This requires complicate operations, and makes it difficult to readily grasp the status of mail that has not yet been transmitted.

### SUMMARY OF THE INVENTION

An object of the present invention is to provide an electronic mail processing apparatus and an electronic mail processing method that allow easy management of mail that needs to be answered and of mail that has not yet been transmitted. Another object of the present invention is to provide a recording medium having such an electronic mail processing program stored therein.

To achieve the above objects, according to one aspect of the present invention, an electronic mail processing apparatus for transmitting and receiving mail by way of a communications network is provided with: an input unit; a display unit; an editing unit for creating a mail message that demands a reply or a mail message that does not demand a reply by using an input from the input unit; a transmitter unit for transmitting the created mail message; a receiver unit for receiving a mail message from an external apparatus; a storage unit for storing information as to the created mail message, the information including whether the created mail message demands a reply or not; a managing unit for managing the storage unit so that, in accordance with an input from the input unit, a mail message of which information is stored in the storage unit is displayed on the display unit; and a checking unit for checking whether the received mail message is a reply to a mail message that demands a reply. Here, when the checking unit finds the received mail message to be a reply to a mail message that demands a reply, the managing unit stores in the storage unit that fact that there has been a reply to the mail message that demands a reply.

In this electronic mail processing apparatus, for a created mail message, information as to whether it demands a reply or not is stored; for a received mail message, whether it is a reply to a mail message demanding a reply or not is checked, and, if it is, this fact is stored. This saves the user from checking whether or not there has been a reply to a transmitted mail message, and thus makes management of reply-demanding mail easy.

The electronic mail processing apparatus may be so designed that, when the managing unit displays on the display unit a mail message of which information is stored in the storage unit, if the mail message demands a reply, or if the mail message demands a reply and if there has already been a reply thereto, the managing unit displays together therewith a mark indicating that the mail message demands a reply, or a mark indicating that there has already been a reply. This permits the user to know, simply by looking at the display, whether there is a mail message that demands a reply, or whether there has already been a reply to a mail message that demands a reply.

The electronic mail processing apparatus may be so designed that information as to a received mail message is also stored in the storage unit, and that, when the managing unit displays on the display unit a received mail message of which information is stored in the storage unit, if the received mail message is a reply to a mail message that demands a reply, the managing unit displays together therewith a mark indicating that the received mail message is a reply to a mail message that demands a reply.

The above electronic mail processing apparatus may be further provided with a guidance unit for displaying on the display unit a guidance image that shows items used by the editing unit to create a mail message and inputs for those items or marks indicating the presence/absence of such inputs. This configuration allows the user to enter data while looking at guidance screens and confirm what has or has not been entered, and thus makes creation of mail easy.

Here, the items used by the editing unit to create a mail message may include whether a reply is required or not, and the guidance unit may display a mark within the guidance image to indicate that there has been an input requesting a reply. This allows the user to confirm that a mail message demanding a reply is going to be created.

The electronic mail processing apparatus may be so designed that information as to a received mail message is also stored in the storage unit, and that, when a received mail message of which information is stored in the storage unit is specified by an input from the input unit, the guidance unit uses, as inputs for the items, the information of the specified mail message stored in the storage unit. This makes it easy to create a mail message addressed to the sender of a received mail.

Furthermore, the items used by the editing unit to create a mail message may include whether a mail message is a reply to a mail message that demands a reply, and, when the specified mail message demands a reply, the guidance unit may display a mark within the guidance image to indicate that there has been an input indicating that the mail message is a reply by using, as an input indicating that the mail message is a reply to the specified mail message, information that the specified mail message demands a reply. This makes it easy to create a reply mail message when a received mail message demands a reply.

According to another aspect of the present invention, an electronic mail processing apparatus for transmitting and receiving electronic mail by way of a communications network is provided with: an input unit; a display unit; an editing unit for creating a mail message by using an input from the input unit: a transmitter unit for transmitting the created mail message; a receiver unit for receiving a mail message from an external apparatus; a storage unit for storing the created mail message together with information as to whether the created mail message has already been transmitted or not; and a warning unit for checking whether there is a mail message that has not yet been transmitted and, if there is a mail message that has not yet been transmitted, displaying a warning on the display unit to warn that there is a mail message that has not yet been transmitted.

This electronic mail processing apparatus permits the user to know, simply by looking at the display, whether there is a mail message that has not yet been transmitted among created mail messages.

According to another aspect of the present invention, a method for processing electronic mail transmitted and received by way of a communications network includes: an editing step of creating a mail message that demands a reply or a mail message that does not demand a reply; a first storing step of storing information as to the created mail message, the information including whether the created mail message demands a reply or not; a transmitting step of transmitting the created mail message; a receiving step of receiving a mail message from an external apparatus: a checking step of checking whether the received mail message is a reply to a mail message that demands a reply; and a second storing step of storing, when the received mail message is a reply to a mail message that demands a reply, the fact that there has been a reply to the mail message that demands a reply.

By this electronic mail processing method, for a created mail message, information as to whether it demands a reply or not is stored; for a received mail message, whether it is a reply to a mail message demanding a reply or not is checked, and, if it is, this fact is stored. This saves the user from checking whether or not there has been a reply to a transmitted mail message, and thus makes management of reply-demanding mail easy.

The electronic mail processing method may further include a displaying step of displaying a list of mail messages of which information has been stored in the first storing step together with information, for each mail message, as to whether the mail message demands a reply or not and, when the mail message demands a reply, whether there has been a reply thereto or not.

This permits the user to know, simply by looking at the display, whether there is a mail message that demands a reply, or whether there has already been a reply to a mail message that demands a reply.

According to another aspect of the present invention, a method for processing electronic mail transmitted and received by way of a communications network includes: an editing step of creating a mail message; a storing step of storing the created mail message; a first transmitting step of transmitting the stored mail message and storing the fact that the mail message has been transmitted; a checking step of checking whether or not there is a mail message that has not yet been transmitted among stored mail messages; a warning step of, when there is a mail message that has not yet been transmitted among the stored mail messages, displaying a warning indicating that there is a mail message that has not yet been transmitted; and a second transmitting step of transmitting a mail message that has been recognized by a user as not having been transmitted yet and storing the fact that the mail message has been transmitted.

This processing method permits the user to recognize easily the presence of a yet-to-be-transmitted mail message, and in addition allows the yet-to-be-transmitted mail message to be transmitted when the user simply confirms its presence.

According to still another aspect of the present invention, a program for achieving such an electronic mail processing method as described above is recorded on a recording medium. This makes it possible to manage mail that demands a reply, or mail that has not yet been transmitted, with ease simply by making an electronic mail processing apparatus read the program stored on the recording medium.

### BRIEF DESCRIPTION OF THE DRAWINGS

This and other objects and features of the present invention will become clear from the following description, taken in conjunction with the preferred embodiments with reference to the accompanying drawings in which:
Fig. 1 is a perspective view showing the appearance of the electronic mail processing apparatus according to the invention;
Fig. 2 is an exploded perspective view showing the structure of the input/output unit of the electronic mail processing apparatus of the invention;
Fig. 3 is a functional block diagram showing the overall configuration of the electronic mail processing apparatus of the invention;
Fig. 4 is a diagram illustrating the details of the items stored in the reply status storage section in the electronic mail processing apparatus of the invention;
Fig. 5 is a functional block diagram showing the details of the central controller unit of the electronic mail processing apparatus of the invention;
Figs. 6A and 6B are diagrams showing the screens displayed when an outgoing mail message is created in the electronic mail processing apparatus of the invention;
Figs. 7A and 7B are diagrams showing the screens displayed to list transmitted mail messages and to show a specific transmitted mail message in the electronic mail processing apparatus of the invention;
Figs. 8A and 8B are diagrams showing the screens displayed to list received mail messages, when a reply mail message is received, and to show a specific received mail message in the electronic mail processing apparatus of the invention;
Fig. 9 is a diagram showing the screen displayed to show the reply status in the electronic mail processing apparatus of the invention;
Fig. 10 is a flow chart of the procedure performed when an outgoing mail message is created and transmitted in the electronic mail processing apparatus of the invention;
Fig. 11 is a flow chart of the procedure performed when a list of transmitted mail is displayed in the electronic mail processing apparatus of the invention;
Fig. 12 is a flow chart of the procedure performed when mail is received in the electronic mail processing apparatus of the invention;
Figs. 13A and 13B are diagrams showing the screens displayed to indicate a warning of mail that has not yet been transmitted and to show mail that has not yet been transmitted in the electronic mail processing apparatus of the invention; and
Fig. 14 is a flow chart of the procedure performed when a warning is indicated of mail that has not yet been transmitted in the electronic mail processing apparatus of the invention.

### DESCRIPTION OF THE PREFERRED EMBODIMENTS

Hereinafter, embodiments of an electronic mail processing apparatus, an electronic mail processing method, and a recording medium having an electronic mail processing program stored therein according to the present invention will be described with reference to the accompanying drawings.

First, a description will be given of the basic concept and configuration of an electronic mail processing apparatus, an electronic mail processing method, and a recording medium having an electronic mail processing program stored therein according to the invention.

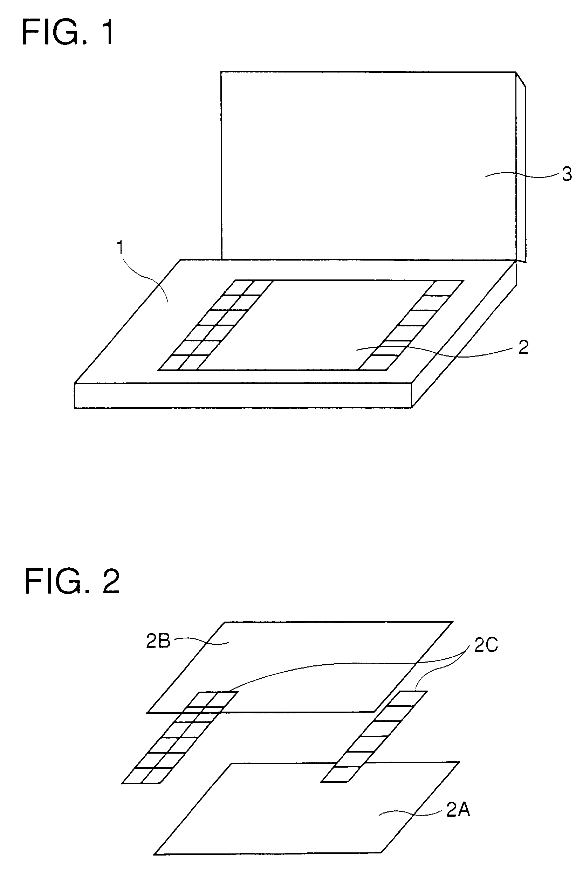

Fig. 1 is a perspective view showing the appearance of an electronic mail processing apparatus according to the invention.

In Fig. 1, reference numeral 1 represents the cabinet unit of the electronic mail processing apparatus. The cabinet unit 1 has an input/output unit 2 composed of a display unit and a transparent tablet integrated together, an infrared communication unit (not shown), a pen holder unit (not shown), and others. The cabinet unit 1 incorporates various control circuits for controlling the input/output unit 2, the infrared communication unit (not shown), an interface (not shown), and others, as well as a power supply unit for supplying electric power to whichever part of the electronic mail processing apparatus requires it, and others. Reference numeral 3 represents a cover, which is fitted to the back of the cabinet unit 1 with a hinge so as to be rotatable in such a way as to cover and thereby protect the input/output unit 2 when the electronic mail processing apparatus is carried around.

Fig. 2 is an exploded perspective view of the input/output unit 2, which is composed of a display unit and a transparent tablet integrated together. Reference numeral 2A represents a thin, matrix-type liquid crystal display unit that can display characters and figures. As required, the liquid crystal display unit 2A may be provided with a backlighting device such as an EL (electroluminescence) panel on its back surface.

Reference numeral 2B represents a transparent tablet that is so large as to cover the liquid crystal display unit 2A. The transparent tablet 2B is composed of two transparent sheets each having a transparent electrode laid over its inner surface, with the two electrodes kept out of contact in normal condition by small projection-like spacers printed at regular intervals between them. When the transparent tablet 2B is, somewhere on its surface, touched with a finger, a pen, or the like, the two electrodes are brought into contact, and the location of the touch is detected.

Reference numeral 2C represents a film on which fixed keys are printed. This film 2C is inserted between the liquid crystal display unit 2A and the transparent tablet 2B, and the fixed keys, to which frequently used functions are assigned, are printed with symbols or the like that are easy to recognize. Thus, by displaying a specific item at a specific location on the liquid crystal display unit 2A, it is possible, by detecting the corresponding location on the transparent tablet 2B which the user touches to specify the item, to detect the item specified by the user.

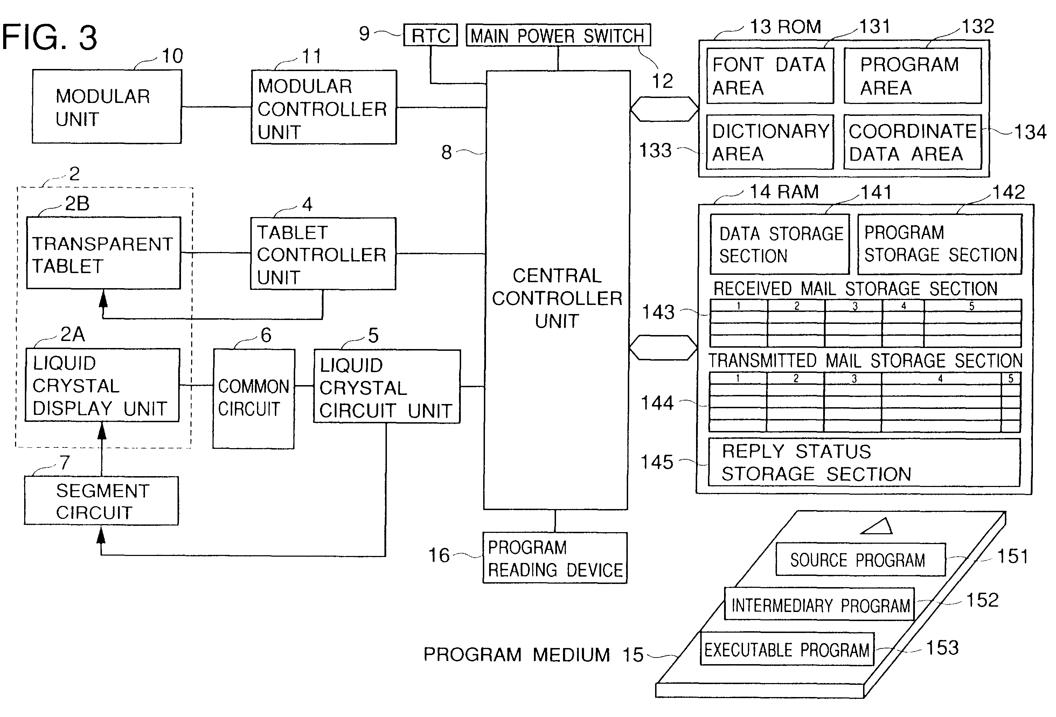

Fig. 3 is a functional block diagram showing the overall configuration of the electronic mail processing apparatus.

Reference numeral 4 represents a tablet controller unit for obtaining coordinate data from the transparent tablet 2B. The tablet controller unit 4 is connected to the transparent electrodes laid over the transparent sheets constituting the transparent tablet 2B. The tablet controller unit 4 detects the transparent electrodes being brought into contact by a touch with a finger, pen, or the like, and determines the location of the touch.

Reference numeral 5 represents a liquid crystal circuit unit. The liquid crystal circuit unit 5 has bit-mapped data as to which pixels of the liquid crystal display to turn on stored therein, and feeds display signals to a common circuit 6 and to a segment circuit 7 as required.

Reference numeral 8 represents a central controller unit, which controls input and output data in accordance with various commands it receives.

Reference numeral 9 represents an RTC. (real-time clock), which counts time on the basis of a clock signal it receives from a resonator (not shown) to output the current date (year, month, day) and time (hours, minutes, seconds).

Reference numeral 10 represents a modular unit, which is connected to a communications network to achieve, through a modular controller unit 11, transmission/reception of electronic mail and data communication over the Internet.

Reference numeral 12 represents a main power switch, which is operated to turn on or off the supply of electric power from the power supply unit.

Reference numeral 13 represents a ROM, which has a font data area 131 for storing the font of the characters that can be displayed on the liquid crystal display unit 2A, a program area 132 for storing the program according to which the central controller unit 8 operates, a dictionary area 133 for storing a dictionary referred to for character conversion, and a coordinate data area 134 for storing data used to convert the coordinates detected by the tablet controller unit 4 to the corresponding display coordinates.

Reference numeral 14 represents a RAM, which has a data storage section 141, a program storage section 142, a received mail storage section 143, a transmitted mail storage section 144, and a reply status storage section 145. The data storage section 141 is used to store various kinds of data such as messages and figures entered from the input/output unit 2 by the user. The program storage section 142 is used to store a program that is installed in the electronic mail processing apparatus from a program medium 15 by the use of a program reading device 16. The received mail storage section 143 is used to store received mail, and the transmitted mail storage section 144 is used to store mail that is going to be or has been transmitted. The reply status storage section 145 is used to store the reply status of a transmitted mail message that demands a reply.

The received mail storage section 143 and the transmitted mail storage section 144 are configured as follows.

The received mail storage section 143 consists of a received mail message title string 143-1, a sender address string 143-2, an addressee address string 143-3, a transmission date/time string 143-4, and a received mail message text 143-5.

The transmitted mail storage section 144 consists of a transmitted mail message title string 144-1, an addressee address string 144-2, a transmission date/time string 144-3, a transmitted mail message text 144-4, and a "reply demanded" flag 144-5.

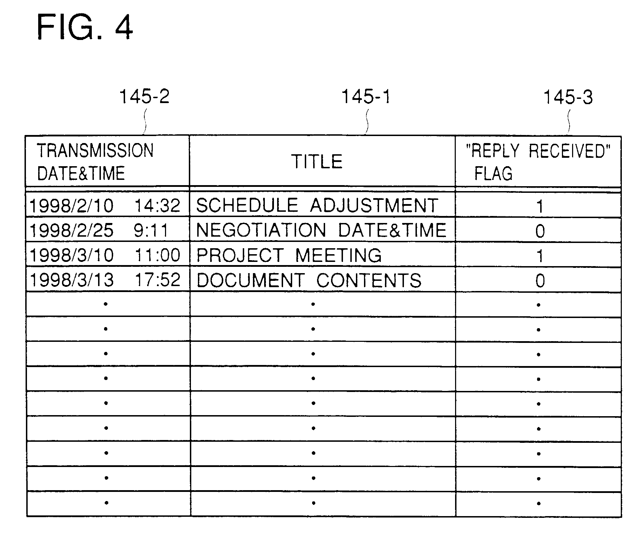

The reply status storage section 145 is configured as shown in Fig. 4.

The reply status storage section 145 consists of a title string 145-1 showing the title of a reply-demanding transmitted mail message, a transmission date/time string 145-2 showing the date and time of transmission of the reply-demanding transmitted mail message, and a "reply received" flag 145-3 indicating whether there has already been a reply or not. The "reply received" flag 145-3 remains "0" until it is updated to "1" when a reply is received.

The above-mentioned program medium 15 is a data recording medium that can be detached from the cabinet unit 1 of the electronic mail processing apparatus; for example, the program medium 15 may be an optical disk such as a CD-ROM, MD, or DVD, or may be a floppy disk, magnetic tape, IC card, optical card, or the like. On the program medium 15 are stored an executable program 153 that is read into the cabinet unit 1 so as to be run thereon, a source program 151 from which the executable program can be built, and an intermediary program 152.

The program reading device 16 may be of any type and of any shape, and there may be provided any number of such devices, as long as it, or they, can handle the data recording medium actually used.

When no program has previously been installed in the cabinet unit 1, the electronic mail processing apparatus runs a program installer (not shown) incorporated therein, and, by using the program reading device 16, reads from the program medium 15 the program and data necessary to achieve electronic mail processing according to the invention. The data is stored in the data storage section 141 in the RAM 14, and the program codes of the executable program are stored in the program storage section 142 in the RAM 14.

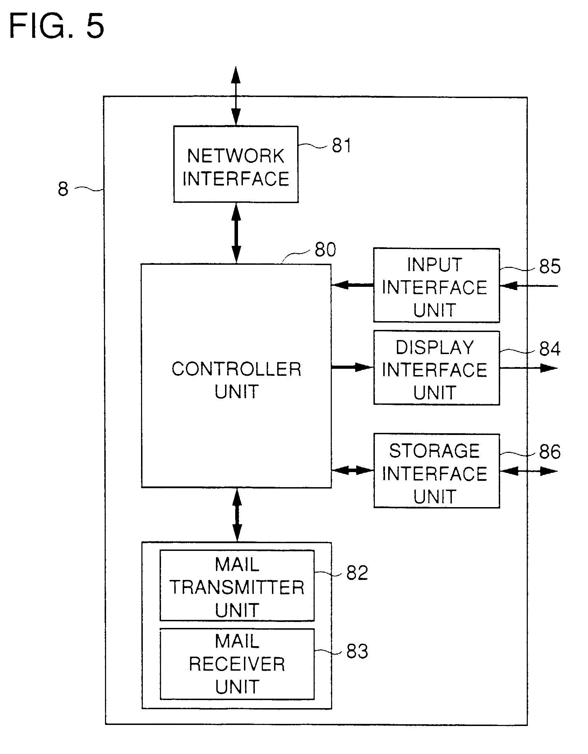

Next, how the central controller unit 8 functions will be described with reference to the detailed functional block diagram shown in Fig. 5.

The central controller unit 8 includes a controller unit 80, a network interface 81, a mail transmitter unit 82, a mail receiver unit 83, a display interface unit 84, an input interface unit 85, and a storage interface 86. The controller unit 80 is in charge of the overall control of the electronic mail processing apparatus of the invention constituted by the ROM 13, RAM 14, input/output controller, and other components, and performs various operations related to mail, including creation of outgoing mail messages. The network interface 81 performs network communication with the outside. The mail transmitter unit 82 transmits mail messages to specified addressees. The mail receiver unit 83 receives mail messages from other apparatuses, and classifies the received mail messages according to the addressee.

The display interface unit 84 controls the liquid crystal display circuit unit 5 for driving the liquid crystal display unit 2A shown in Fig. 3. The input interface unit 85 transfers the data fed from the tablet controller unit 4 for controlling the transparent tablet 2B shown in Fig. 3 to the controller unit 80. The storage interface unit 86 stores the mail messages transmitted by the mail transmitter unit 82 in the transmitted mail storage section 144 in the RAM 14, and stores the mail messages received and classified according to the addressee by the mail receiver unit 83 in the received mail storage section 143 in the RAM 14. Moreover, the storage interface unit 86 also reads out the data stored in the transmitted mail storage section 144 and the received mail storage section 143.

Hereinafter, embodiments will be described that use the basic concept and configuration of an electronic mail processing apparatus, an electronic mail processing method, and a recording medium having an electronic mail processing program stored therein according to the invention.

### (First Embodiment)

A first embodiment of the present invention will be described below.

In this embodiment, the first object of the invention, i.e. easy management of mail that demands a reply, is achieved. This is realized by storing, for a created mail message, information including whether the mail message demands a reply or not, and checking, when a mail message is received from another apparatus, whether or not the mail message is a reply to a mail message that demands a reply so that, if it is, this fact is stored.

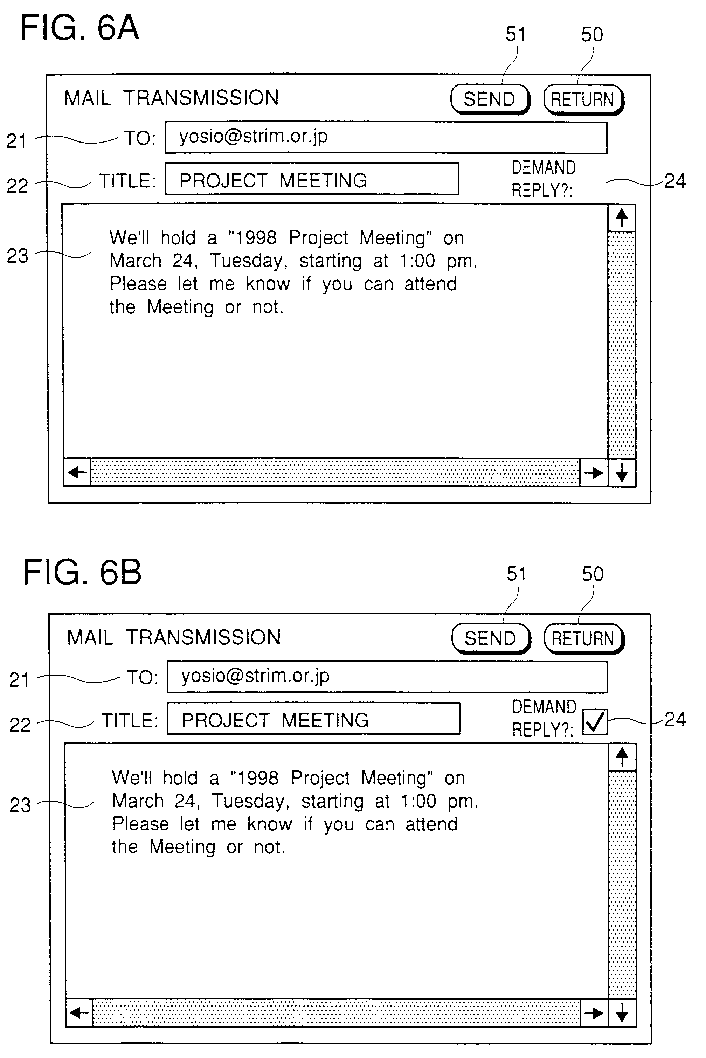

First, the operations performed to transmit a mail message will be described with reference to Figs. 6A to 9.

Figs. 6A and 6B are diagrams showing the screens displayed when a mail message is transmitted.

The user, when transmitting an electronic mail message, creates an outgoing mail message by using the screen shown in Fig. 6A.

First, the user enters the mail address of the addressee to which the mail message is going to be transmitted in an addressee input area 21, enters the title in a title input area 22, and enters the text to be transmitted in a text input area 23.

Next, if the user wishes to have a reply to the created mail message, he touches a "reply demanded" input area 24. When the "reply demanded" input area 24 is touched, a mark consisting of a frame and a check is displayed in the "reply demanded" input area 24 as shown in Fig. 6B. Here, if the user does not wish to have a reply, he does not touch the "reply demanded" input area 24 so that the "reply demanded" input area 24 is left blank as shown in Fig. 6A. Note that, after touching the "reply demanded" input area 24 to display the mark, touching the "reply demanded" input area 24 again causes the mark to disappear as shown in Fig. 6A.

In either of the cases shown in Figs. 6A and 6B, touching a "send" button 51 causes the electronic mail processing apparatus to store the entered data in the transmitted mail storage section 144 in the RAM 14 and transmit the mail message to the mail address entered in the addressee input area 21. At this time, the title entered in the title input area 22, the date and time of transmission, and the "reply demanded" flag indicating the state of the "reply demanded" input area 24 are stored, as the title string 145-1, transmission date/time string 145-2, and "reply received" flag 145-3, respectively, within the reply status storage section 145 in the RAM 14.

On the other hand, in either of the cases shown in Figs. 6A and 6B, touching a "return" button 50 instead of the "send" button 51 causes the entered data to be canceled completely, and the screen returns to the screen that had been displayed before creation of an outgoing mail message was started.

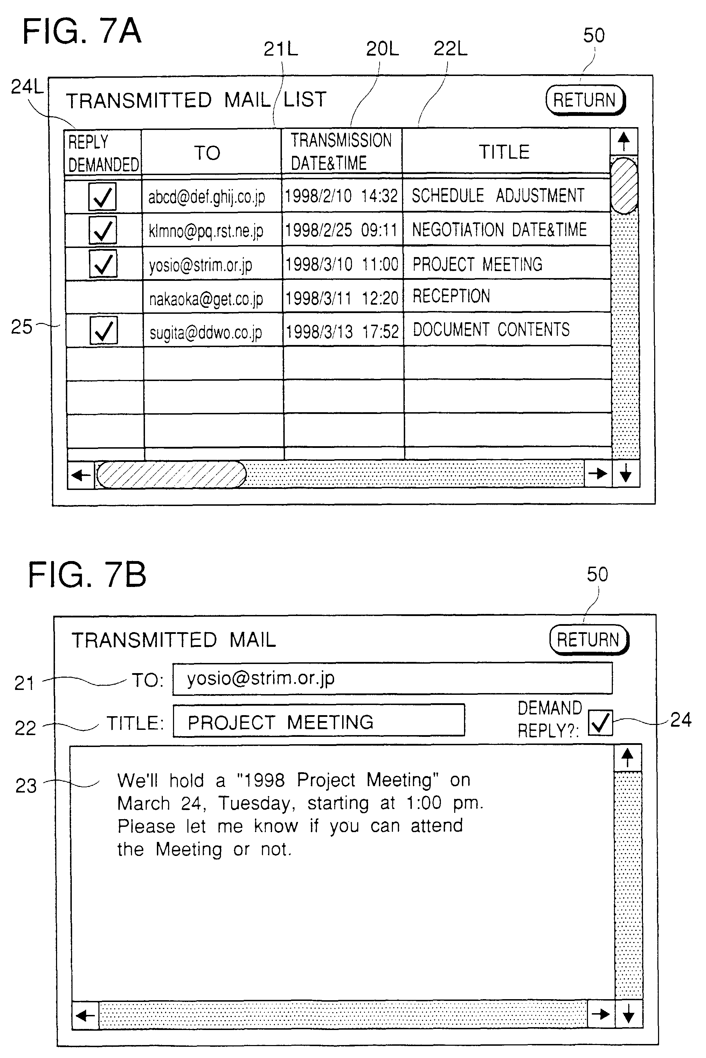

Figs. 7A and 7B show the screens displayed to list transmitted mail messages and to show a specific transmitted mail message selected from this transmitted mail message list.

On the transmitted mail message list screen shown in Fig. 7A, in a list 25 of transmitted mail messages are displayed a "reply demanded" area 24L indicating whether a reply is demanded or not, the addressees 21L to whom mail messages were transmitted, the dates/times 20L of transmission, and the titles 22L of transmitted mail messages.

Here, when the user touches the "reply demanded" area 24L of a transmitted mail message whose reply status is blank in the list, a mark is additionally displayed, and the transmission date/time 20L, the title 22L, and the "reply demanded" state 24L of this transmitted mail message are stored in the reply status storage section 145 in the RAM 14.

When the user touches the portion of the "reply demanded" area 24L where a mark is already displayed, the mark disappears, and the corresponding data is deleted from the reply status storage section 145 of the RANI 14.

Moreover, when the user touches one of the transmitted mail messages listed on the screen, i.e. when the user touches a portion, such as the addressee, the transmission date/time, and the title other than the "reply demanded" area 24L, of a transmitted mail message, the detailed contents of that mail message are read out, and the transmitted mail message screen is displayed as shown in Fig. 7B.

When the user selects a transmitted mail message for which a mark is displayed in the "reply demanded" area 24L, the mark is displayed also in the "reply demanded" input area 24 on the transmitted mail message screen shown in Fig. 7B.

When the user touches the "return" button 50 on the screen shown in Fig. 7B, the transmitted mail message screen is closed and returns to the transmitted mail message list screen shown in Fig. 7A.

When the user touches the "return" button 50 on the screen shown in Fig. 7A, the transmitted mail message list screen is closed and returns to the screen that had been displayed previously.

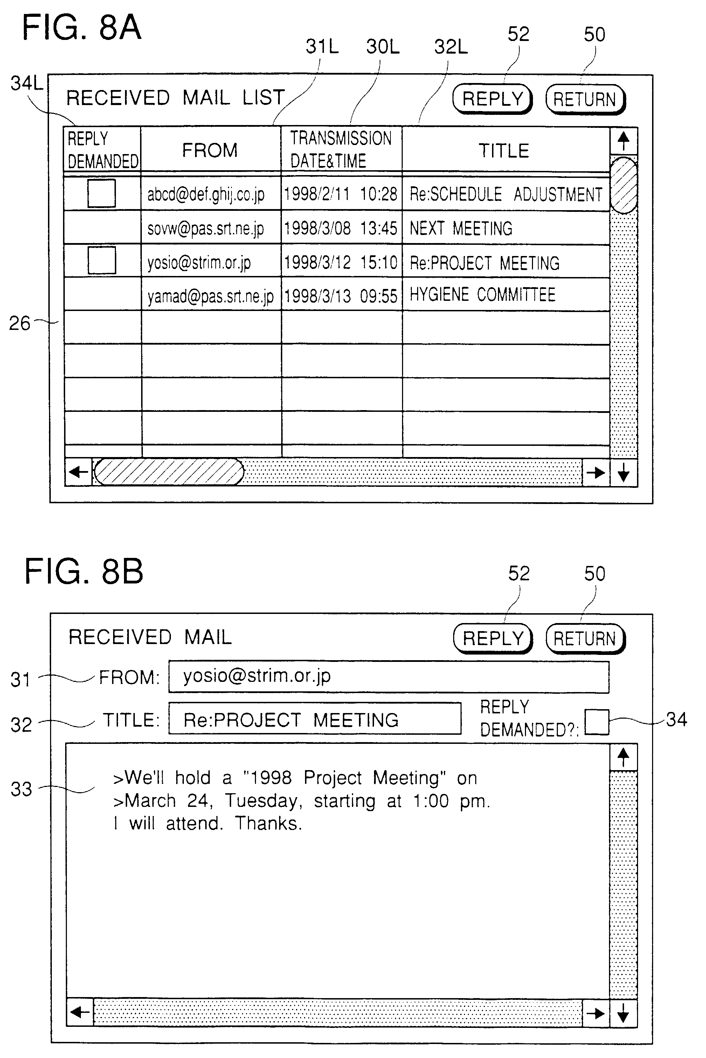

Figs. 8A and 8B are diagrams showing the screens displayed to list received mail messages including reply mail messages to transmitted mail messages demanding a reply and to show a specific received mail message selected from this received mail message list.

On the received mail message list screen shown in Fig. 8A, in a list 26 of received mail messages are displayed a "reply demanded" area 34L indicating the reply status, the senders 31L from whom mail messages were transmitted, the dates/times 30L of transmission, and the titles 32L of received mail messages.

Here, to create a reply mail message to a specific mail message in the list, the user lightly touches the specific mail message to place a cursor, such as realized by reverse video, on that mail message, and then, in this state, the user touches a "reply" button 52. This causes a screen for creating a reply mail message using various items of data of the specified received mail message to be displayed.

On the other hand, to display the details of a specific mail message in the list, the user lightly touches the specific mail message to place a cursor, such as realized by reverse video, on that mail message, and then, in this state, the user touches it once again. This causes the detailed contents of the specified mail message to be read out, and the received mail message screen is displayed as shown in Fig. 8B.

In Fig. 8B, as the contents of a received mail message are displayed a sender area 31, the title of the received mail message 32, the text of the received mail message 33, and a "reply demanded" indication area 34 for indicating whether a reply is demanded or not. Also here, just as in Fig. 8A, when the user touches the "reply" button 52, a screen for creating a reply mail message using various items of data of the specified received mail message is displayed.

When a reply mail massage is received to the mail message titled "Re: Project Meeting" created and transmitted with a demand for a reply in Fig. 6B described above, the mark in the "reply demanded" area 34L is changed to a mark without a check as shown in Fig. 8A.

In Fig. 8A, when the user selects a received mail message for which a mark is displayed in the "reply demanded" area 34L, the mark is displayed also in the "reply demanded" indication area 34 on the received mail message screen shown in Fig. 8B.

Here, when the user touches the "reply" button 52, a screen for creating a reply mail message using various items of data of the received mail message now being shown is displayed.

On the other hand, when the user touches the "return" button 50, the received mail message screen is closed and returns to the received mail message list screen shown in Fig. 8A.

When the user further touches the "return" button 50 on the screen shown in Fig. 8A, the transmitted mail message list screen is closed and returns to the screen that had been displayed previously.

Although the "reply" button 52 is described above as being valid only when a mark is displayed in the "reply demanded" area 34L on the message list screen and in the "reply demanded" indication area 34 in the message screen (i.e. the button 52 works only in this condition), this does not necessarily have to be so.

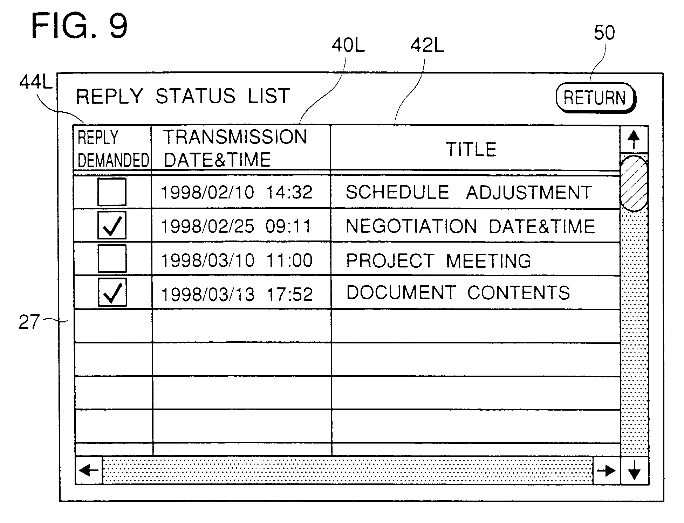

Fig. 9 is a diagram showing the screen displayed to show a list of the reply status of mail messages that were transmitted with a demand for a reply.

When display of a reply status list is requested from a menu screen (not shown), the data in the reply status storage section 145 of the RAM 14 is read out to display a reply status list as shown in Fig. 9.

This figure shows the state as observed when the contents of the reply status storage section 145 of the RAM 14 are as shown in Fig. 4.

On the reply status list screen shown in Fig. 9, in a reply status list 27 are displayed a "reply demanded" area 44L for indicating the reply status, the dates/times 40L of transmission, the titles 42L of transmitted mail messages.

For example, if a reply is received, as with the mail message titled "Re: Project Meeting", the check is deleted from the mark displayed in the "reply demanded" area 44L, i.e. the mark is changed to a mark having only a frame.

Here, when the user touches the "return" button 50, the reply status list screen is closed and returns to the screen that had been displayed previously.

The workings of the electronic mail processing apparatus that make possible the operations described above will be described below with reference to the functional block diagram shown in Fig. 5. Note that the configuration of the central controller unit 8 shown in Fig. 5 has already been described, and therefore overlapping descriptions will not be repeated.

A transmitted mail message is, on the receiver's side, i.e. at the site of the addressee, received by the mail receiver unit 83 through the network interface 81, is then classified according to the addressee, and is then stored through the storage interface unit 86 in the received mail storage unit 143 secured within the RAM 14.

An outgoing mail message is displayed on the screen of the input/output unit 2 through the display interface unit 84 in accordance with the signal input from the outgoing mail message creation screen shown in Fig. 6A or 6B. For example, when the user touches the "reply demanded" input area 24, the controller unit 80 outputs a signal to the display interface unit 84 so that, if the "reply demanded" area 24 is blank, a mark is displayed and, if a mark is already displayed. the mark is deleted.

When, after entering all the data necessary for mail transmission, the user touches the "send" button 51, the controller 80 outputs a signal to the storage interface unit 86 so that the data of the outgoing mail message displayed on the input/output unit 2 is stored in the outgoing mail message storage section 144 of the RAM 14.

Next, using the data of the outgoing mail message stored in the outgoing mail message storage section 144, the mail transmitter unit 82 performs mail transmission operations.

Moreover, in the cases shown in Figs. 6A and 6B, when transmission is requested, a signal is output to the storage interface unit 86 so that the value of the "reply demanded" flag 144-5 of the stored outgoing mail message is determined in accordance with the state of the "reply demanded" input area 24. Thus, if this value indicates that a reply is demanded, the title 145-1 of the outgoing mail message, the transmission date/time 145-2 representing the date and time of transmission, and the "reply received" flag 145-3 indicating whether a reply has been received or not are stored in the reply status storage section 145. The "reply received" flag 145-3 is "0" at the time of transmission, because no reply has been received yet at that time. When a reply to this mail message is received, the value of the "reply received" flag 145-3 is updated to "1".

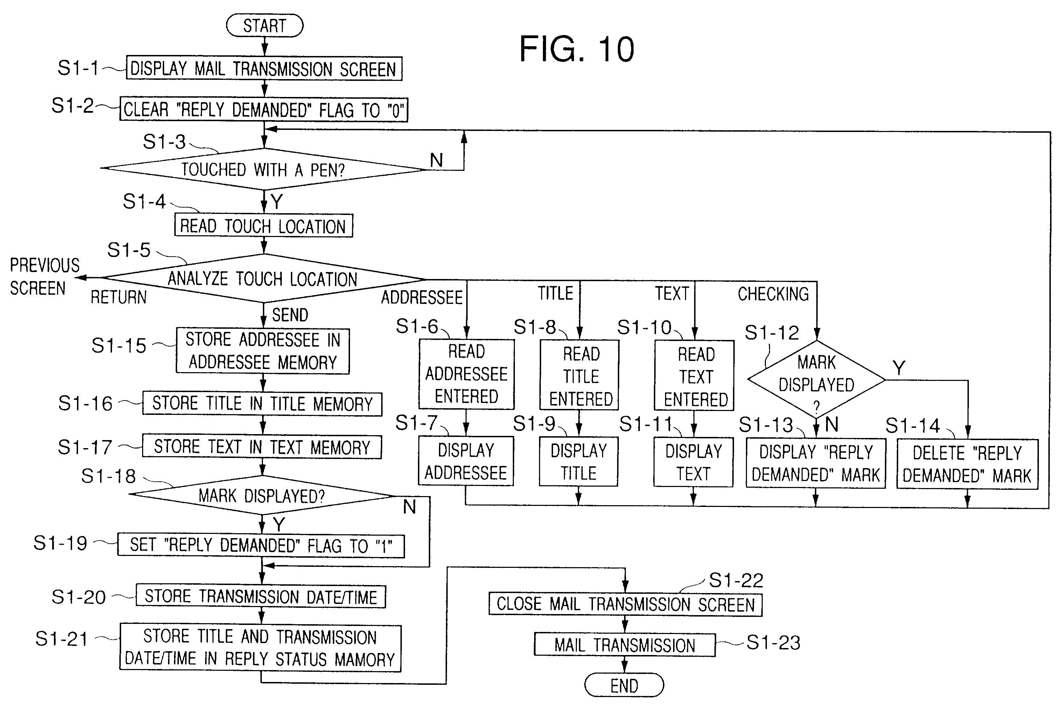

Next, the procedure followed to achieve the above described workings of the electronic mail processing apparatus will be described with reference to the flow charts shown in Figs. 10 to 12.

Fig. 10 is a flow chart of the procedure performed when a mail message is transmitted. This procedure includes the following steps.

S1-1: A screen for mail transmission is displayed.

S1-2: The "reply demanded" flag is cleared (i.e. reset to "0").

S1-3: A touch with a pen on the input/output unit 2 is waited for.

S1-4: When the input/output unit 2 is touched, the location of the touch is read.

S1-5: The location of the touch is analyzed. If the location of the touch is on the "return" button 5, the screen for mail transmission is closed and returns to the screen that had been displayed previously.

S1-6: If the location of the touch is in the addressee input area 21, the mail address entered therein is read.

S1-7: The mail address entered in the addressee input area 21 is displayed, and the flow returns to S1-3.

S1-8: If the location of the touch is in the title input area 22, the title entered therein is read.

S1-9: The title entered in the title input area 22 is displayed, and the flow returns to S1-3.

S1-10: If the location of the touch is in the text input area 23, the mail message text entered therein is read.

S1-11: The text entered in the text input area 23 is displayed, and the flow returns to S1-3.

S1-12: If the location of the touch is in the "reply demanded" input area 24, whether a mark is currently displayed or not is checked in accordance with whether a "reply demanded" state is required or not.

S1-13: If no mark is currently displayed in the "reply demanded" input area 24, a mark is displayed in the "reply demanded" input area 24, and the flow returns to S1-3.

S1-14: If a mark is currently displayed in the "reply demanded" input area 24, the mark is deleted from the "reply demanded" input area 24, and the flow returns to S1-3.

S1-15: If the location of the touch is on the "send" button 51, the mail address displayed in the addressee input area 21, to which a mail message is going to be transmitted, is stored in the addressee memory 144-2 in the transmitted mail storage section 144 in the RAM 14.

S1-16: The title displayed in the title input area 22 is stored in the title memory 144-1 in the transmitted mail storage section 144.

S1-17: The text displayed in the text input area 23 is stored in the text memory 144-4 in the transmitted mail storage section 144.

S1-18: Whether a mark is currently displayed in the "reply demanded" input area 24 or not is checked. If no mark is currently displayed in the "reply demanded" input area 24, the flow proceeds to S1-20.

S1-19: If a mark is currently displayed in the "reply demanded" input area 24, a "1" is stored in the "reply demanded" flag 144-5 in the transmitted mail storage section 144 in the RAM 14.

S1-20: The value representing the current date and time is, as the date and time of transmission of the mail message, stored in the transmission date/time 144-3 in the transmitted mail storage section 144 in the RAM 14.

S1-21: The title, the transmission date/time, and the "reply demanded" state are stored in the title 145-1, the transmission date/time 145-2, and the "reply received" flag 145-3, respectively, in the reply status storage section 145 in the RAM 14.

S1-22: The mail transmission screen is closed.

S1-23: Using the data stored in the transmitted mail storage section 144 in the RAM 14, mail transmission is performed, and the procedure is ended.

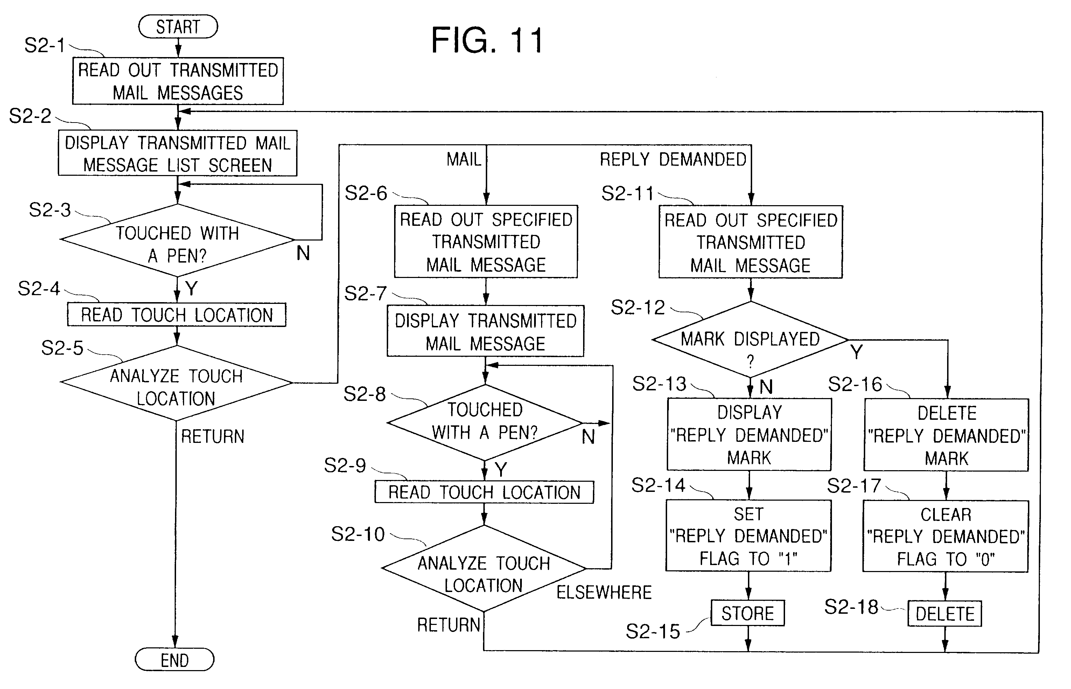

Fig. 11 is a flow chart of the procedure performed to display a list of transmitted mail messages. This procedure includes the following steps.

S2-1: The data of transmitted mail messages is read out from the transmitted mail storage section 144 in the RAM 14.

S2-2: In accordance with the data thus read out, a transmitted mail message list screen as shown in Fig. 7A is displayed.

S2-3: A touch with a pen on the input/output unit 2 is waited for.

S2-4: When the input/output unit 2 is touched, the location of the touch is read.

S2-5: The location of the touch is analyzed. If the location of the touch is on the "return" button 50, the procedure is ended; that is, the screen returns to the screen that had been displayed before the display of the transmitted mail message list.

S2-6: If the location of the touch is somewhere other than the "reply demanded" area 24L of the mail messages being displayed, the specified transmitted mail message is read out from the transmitted mail storage section 144 in the RAM 14.

S2-7: Using the data thus read out, a transmitted mail message screen as shown in Fig. 7B is displayed.

S2-8: A touch with a pen on the input/output unit 2 is waited for.

S2-9: When the input/output unit 2 is touched, the location of the touch is read.

S2-10: The location of the touch is analyzed. If the location of the touch is on the "return" button 50, the flow returns to S2-2, and, if the location of the touch is somewhere other than the "return" button 50, the flow returns to S2-8.

S2-11: If the location of the touch is in the "reply demanded" area 24L of the mail messages being displayed, the specified transmitted mail message is read out from the transmitted mail storage section 144 in the RAM 14.

S2-12: Whether a mark is currently displayed in the "reply demanded" area 24L of the specified transmitted mail message or not is checked.

S2-13: If no mark is currently displayed in the "reply demanded" area 24L, a mark indicating that a reply is demanded is displayed.

S2-14: A "1" is stored in the "reply demanded" flag 144-5 of the transmitted mail message read out in S2-11.

S2-15: Out of the data of the transmitted mail message read out in S2-11, the title 145-1 and the transmission date/time 145-2 are stored in the reply status storage section 145 in the RAM 14, and in addition, in accordance with the "reply demanded" flag 144-5 stored in S2-14, a "0" is stored in the "reply received" flag 145-3. Then, the flow returns to S2-3.

S2-16: If a mark is being displayed in the "reply demanded" area 24L of the specified transmitted mail message, the mark indicating that a reply is demanded is deleted.

S2-17: A "0" is stored in the "reply demanded" flag 144-5 of the transmitted mail message read out in S2-11.

S2-18: That portion of the data stored in the reply status storage section 145 in the RAM 14 which corresponds to the data of the transmitted mail message read out in S2-11 is deleted from the reply status storage section 145. Then, the flow returns to S2-3.

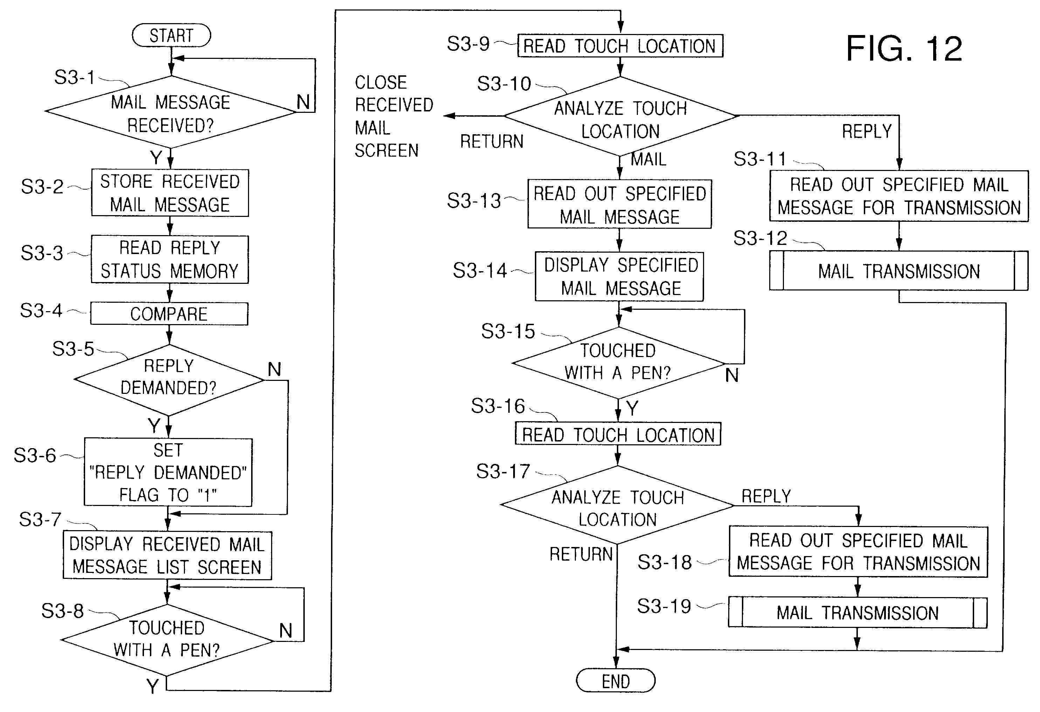

Fig. 12 is a flow chart of the procedure performed when a mail message is received. This procedure includes the following steps.

S3-1: Reception of a mail message is waited for.

S3-2: When a mail message is received, the received mail message is stored in the received mail storage section 143 in the RAM 14.

S3-3: The data in the reply status storage section 145 in the RAM 14 is read out.

S3-4: The data of the received mail message is compared with the title 145-1 and the transmission date/time 145-2 included in the data read out from the reply status storage section 145.

S3-5: Whether the received mail message is a reply mail message to the data in the reply status storage section 145 or not is checked. If the received mail message is not a reply mail message to the data in the reply status storage section 145, the flow proceeds to S3-7.

S3-6: If the received mail message is a reply mail message to the data in the reply status storage section 145, a "1" is stored in the "reply received" flag 145-3 in the reply status storage section 145.

S3-7: A received mail message list screen as shown in Fig. 8A is displayed.

S3-8: A touch with a pen on the input/output unit 2 is waited for.

S3-9: When the input/output unit 2 is touched, the location of the touch is read.

S3-10: The location of the touch is analyzed. If the location of the touch is on the "return" button 50, the received mail message list screen is closed and returns to the screen that had been displayed previously.

S3-11: If the location of the touch is on the "reply" button 52, to prepare for creation of a reply mail message, the contents of the specified mail message is read out from the received mail storage section 143 in the RAM 14.

S3-12: Using the data thus read out. mail transmission (S1-20, S1-22, and S1-23 in Fig. 10) is performed. Thereafter, the procedure is ended.

S3-13: If the location of the touch is on one of the mail messages displayed, the contents of the specified mail message is read out from the received mail storage section 143 in the RAM 14.

S3-14: Using the data thus read out, a received mail message screen as shown in Fig. 8B is displayed.

S3-15: A touch with a pen on the input/output unit 2 is waited for.

S3-16: When the input/output unit 2 is touched, the location of the touch is read.

S3-17: The location of the touch is analyzed. If the location of the touch is on the "return" button 50, the procedure is ended; that is, the screen returns to the screen that had been displayed previously.

S3-18: If the location of the touch is on the "reply" button 52, to prepare for creation of a reply mail message, the contents of the specified mail message is read out from the received mail storage section 143 in the RAM 14.

S3-19: Using the data thus read out, mail transmission (S1-20, S1-22, and S1-23 in Fig. 10) is performed. Thereafter. the procedure is ended.

As described above, in the electronic mail processing apparatus and the electronic mail processing method of this embodiment, a mark is added to the data of an outgoing mail message that demands a reply, and, when a reply mail message is received, the fact that there has been a reply is stored, with the stored mark changed so as to notify the user of the fact. Thus, the user can easily recognize the status of mail messages that demand a reply and the status of the replies thereto; that is, the user can easily manage reply-demanding mail messages.

### (Second Embodiment)

A second embodiment of the present invention will be described below.

In this embodiment, the second object of the invention, i.e. easy management of mail that has not yet been transmitted, is achieved. This is realized by checking whether or not there is any mail that has not yet been transmitted and, if there is any, displaying a warning indicating presence of such mail.

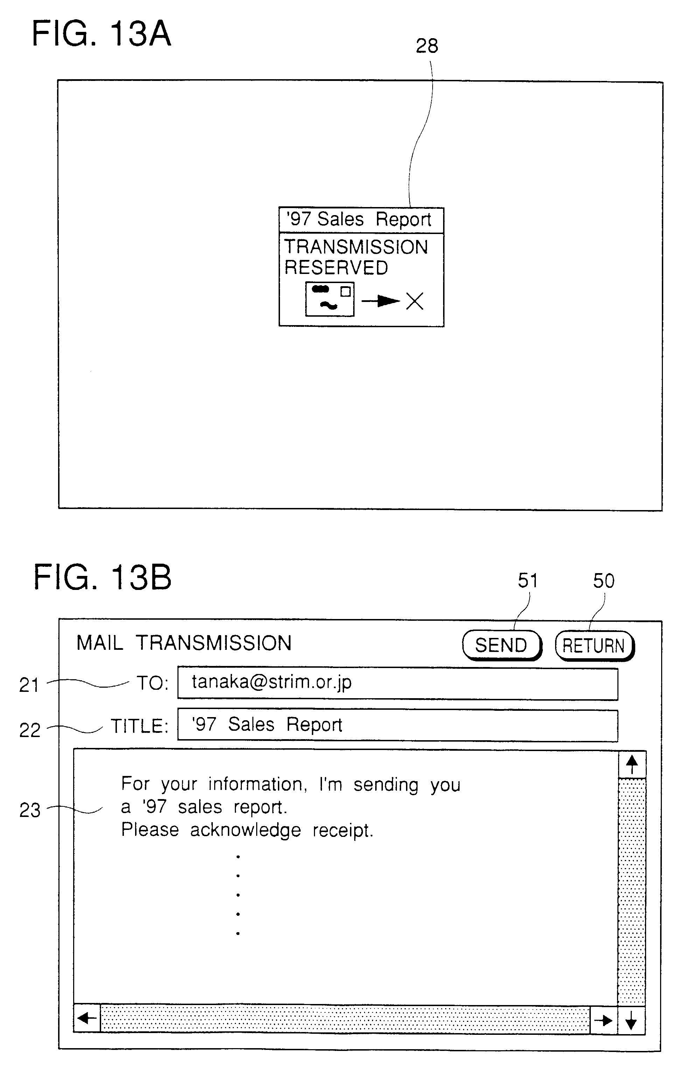

Fig. 13A is a diagram showing a screen displayed when there is mail that has not yet been transmitted.

When the mail system is started from a menu screen (not shown), whether or not there is any mail that has been created but has not yet been transmitted is checked. If there is any mail that has not yet been transmitted, presence of such mail is indicated with an icon 28 or the like as shown in Fig. 13A. In the icon 28, the titles of mail that has not yet been transmitted is shown to allow the user to recognize which mail messages have not yet been transmitted. When the icon 28 is touched, the details of the mail message indicated by the icon 28 is shown as shown in Fig. 13B.

The screen shown in Fig. 13B is the same as the ordinary screen for creating a mail message, and, on this screen, it is possible to perform transmission and editing of mail.

The workings of the electronic mail processing apparatus that make possible the operations described above will be described below with reference to the functional block diagram shown in Fig. 5. Note that the configuration of the central controller unit 8 shown in Fig. 5 has already been described, and therefore overlapping descriptions will not be repeated.

When the mail system is started, the controller unit 80 outputs a signal to the storage interface unit 86 so that mail messages that have not yet been transmitted is extracted from the transmitted mail messages stored in the transmitted mail storage section 144 in the RAM 14.

After extraction of mail that has not yet been transmitted, the controller 80 outputs a signal to the display interface unit 84 so that a warning indicating presence of such mail is displayed with the icon 28 on the input/output unit 2.

When this icon 28 is touched, the signal fed from the input/output unit 2 through the input interface unit 85 is recognized by the controller unit 80, and a resulting command signal is output to the storage interface unit 86 so that the data of the yet-to-be-transmitted mail message corresponding to the icon 28 is read out from the transmitted mail storage section 144 where transmitted mail messages are stored and the mail transmission screen is displayed.

Next, using the data thus read out, the mail transmitter unit 82 creates an outgoing mail message and transmits it.

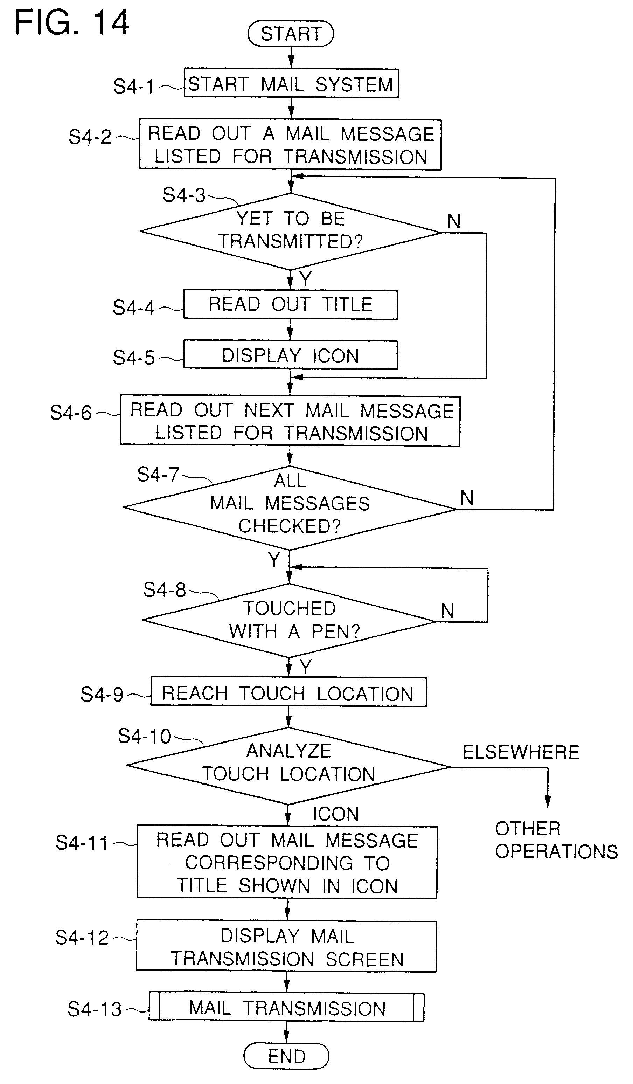

Next, the procedure followed to achieve the above described workings of the electronic mail processing apparatus will be described with reference to the flow chart shown in Fig. 14.

Fig. 14 is a flow chart of the procedure performed to detect mail that has not yet been transmitted and to transmit such mail. This procedure includes the following steps.

S4-1: The mail system is started.

S4-2: The data of transmitted mail messages is read out one by one from the transmitted mail storage section 144 in the RAM 14.

S4-3: Whether or not the mail message thus read out is a mail message that has not yet been transmitted is checked. If the mail message is found to be a mail message that has already been transmitted, the flow proceeds to S4-6.

S4-4: If the mail message is found to be a mail message that has not yet been transmitted, the title of this yet-to-be-transmitted mail message is read out.

S4-5: An icon 28 is displayed together with the title of the yet-to-be-transmitted mail message thus read out.

S4-6: To check whether there is another mail message that has not yet been transmitted, the data of the next transmitted mail message is read out.

S4-7: Whether all of the transmitted mail messages have been checked or not is checked. If all of the transmitted mail messages have not yet been checked, the flow returns to S4-3. If all of the transmitted mail messages have already been checked, the flow proceeds to the next step.

S4-8: A touch with a pen on the input/output unit 2 is waited for.

S4-9: When the input/output unit 2 is touched, the location of the touch is read.

S4-10: The location of the touch is analyzed. If the location of the touch is somewhere other than the icon 28, the operations associated with that location are performed.

S4-11: If the location of the touch is on the icon 28, in accordance with the title indicated in the icon 28, the data of the corresponding yet-to-be-transmitted mail message is read out from the transmitted mail storage section 144 in the RAM 14.

S4-12: Using the data thus read out, a mail transmission screen as shown in Fig. 13B is displayed.

S4-13: Using the data thus read out, mail transmission (S1-20. S1-22, and S1-23 in Fig. 10) is performed. Thereafter, the procedure is ended.

Although the mail transmission screen shown in Fig. 13B is described above as having no "reply demanded" area 24, this does not necessarily have to be so. For example, the mail transmission screen may have a "reply demanded" area 24 as shown in Figs. 6A and 6B.

As described above, in the electronic mail processing apparatus and the electronic mail processing method of this embodiment, when there is mail that has not yet been transmitted, a warning is displayed to indicate presence of such mail, and, when the user confirms the warning, a mail transmission screen is automatically displayed. Thus, the user can easily recognize presence of mail that has not yet been transmitted, and it is possible to prevent failure to transmit mail.

Note that, in the electronic mail processing apparatuses of the first and second embodiments described above, the program according to which those apparatuses operate is stored also in the program medium 15, which is a recording medium. Even if the program is not stored in the electronic mail processing apparatus itself, by reading the program stored in the program medium 15 by the use of the program reading device 16, it is possible to make the apparatus operate in a manner as aimed at by the present invention.

Obviously, many modifications and variations of the present invention are possible in light of the above teachings. It is therefore to be understood that within the scope of the appended claims, the invention may be practiced other than as specifically described.

## Claims

1. An electronic mail processing apparatus for transmitting and receiving mail by way of a communications network, comprising:
an input means (2B);
a display means (2A);
an editing means (80) for creating a mail message that demands a reply or a mail message that does not demand a reply by using an input from the input means;
a transmitting means (82) for transmitting the created mail message;
a receiving means (83) for receiving a mail message from an external apparatus;
a storage means (14) for storing information as to the created mail message, the information including whether the created mail message demands a reply or not;
a managing means (80) for managing the storage means so that, in accordance with an input from the input means, a mail message of which information is stored in the storage means is displayed on the display means; and
a checking means (80) for checking whether the received mail message is a reply to a mail message that demands a reply,
wherein, when the checking means finds the received mail message to be a reply to a mail message that demands a reply, the managing means stores in the storage means a fact that there has been a reply to the mail message that demands a reply.

2. An electronic mail processing apparatus as claimed in claim 1,
wherein, when the managing means displays on the display means a mail message of which information is stored in the storage means, if the mail message demands a reply, the managing means displays together therewith a mark indicating that the mail message demands a reply.

3. An electronic mail processing apparatus as claimed in claim 1,
wherein, when the managing means displays on the display means a mail message of which information is stored in the storage means, if the mail message demands a reply and if there has already been a reply thereto, the managing means displays together therewith a mark indicating that there has already been a reply.

4. An electronic mail processing apparatus as claimed in claim 1,
wherein information as to a received mail message is also stored in the storage means, and
wherein, when the managing means displays on the display means a received mail message of which information is stored in the storage means, if the received mail message is a reply to a mail message that demands a reply, the managing means displays together therewith a mark indicating that the received mail message is a reply to a mail message that demands a reply.

5. An electronic mail processing apparatus as claimed in claim 1, further comprising:
a guidance means (80) for displaying on the display means a guidance image that shows items used by the editing means to create a mail message and inputs for those items or marks indicating presence/absence of such inputs.

6. An electronic mail processing apparatus as claimed in claim 5,
wherein the items include whether a reply is demanded or not, and
wherein the guidance means displays a mark within the guidance image to indicate that there has been an input requesting a reply.

7. An electronic mail processing apparatus as claimed in claim 5,
wherein information as to a received mail message is also stored in the storage means, and
wherein, when a received mail message of which information is stored in the storage means is specified by an input from the input means, the guidance means uses, as inputs for the items, the information of the specified mail message stored in the storage means.

8. An electronic mail processing apparatus as claimed in claim 7,
wherein the items include whether a mail message is a reply to a mail message that demands a reply, and
wherein, when the specified mail message demands a reply, the guidance means displays a mark within the guidance image to indicate that there has been an input indicating that the mail message is a reply by using, as an input indicating that the mail message is a reply to the specified mail message, information that the specified mail message demands a reply.

9. An electronic mail processing apparatus for transmitting and receiving electronic mail by way of a communications network, comprising:
an input means (2B);
a display means (2A);
an editing means (80) for creating a mail message by using an input from the input means;
a transmitting means (82) for transmitting the created mail message;
a receiving means (83) for receiving a mail message from an external apparatus;
a storage means (14) for storing the created mail message together with information as to whether the created mail message has already been transmitted or not; and
a warning means (80) for checking whether there is a mail message that has not yet been transmitted and, if there is a mail message that has not yet been transmitted, displaying a warning on the display means to warn that there is a mail message that has not yet been transmitted.

10. A method for processing electronic mail transmitted and received by way of a communications network, comprising:
an editing step (S1-5 to S1-14) of creating a mail message that demands a reply or a mail message that does not demand a reply;
a first storing step (S1-15 to S1-19) of storing information as to the created mail message, the information including whether the created mail message demands a reply or not;
a transmitting step (S1-20 to S1-23) of transmitting the created mail message;
a receiving step (S3-1 to S3-2) of receiving a mail message from an external apparatus;
a checking step (S3-3 to S3-4) of checking whether the received mail message is a reply to a mail message that demands a reply; and
a second storing step (S3-5 to S3-6) of storing, when the received mail message is a reply to a mail message that demands a reply, a fact that there has been a reply to the mail message that demands a reply.

11. A method for processing electronic mail as claimed in claim 10, further comprising:
a displaying step (S2-2) of displaying a list of mail messages of which information has been stored in the first storing step together with information, for each mail message, as to whether the mail message demands a reply or not and, when the mail message demands a reply, whether there has been a reply thereto or not.

12. A method for processing electronic mail transmitted and received by way of a communications network, comprising:
an editing step (S1-5 to S1-14) of creating a mail message;
a storing step (S1-15 to S1-19) of storing the created mail message;
a first transmitting step (S1-20 to S1-23) of transmitting the stored mail message and storing a fact that the mail message has been transmitted;
a checking step (S4-2 to S4-7) of checking whether or not there is a mail message that has not yet been transmitted among stored mail messages;
a warning step (S4-5) of, when there is a mail message that has not yet been transmitted among the stored mail messages, displaying a warning indicating that there is a mail message that has not yet been transmitted; and
a second transmitting step (S4-11 to S4-13) of transmitting a mail message that has been recognized by a user as not having been transmitted yet and storing a fact that the mail message has been transmitted.

13. A recording medium (15) on which a program for an electronic mail processing apparatus for processing electronic mail transmitted and received by way of a communications network is recorded, the program including:
an editing process (S1-5 to S1-14) of creating a mail message that demands a reply or a mail message that does not demand a reply;
a first storing process (S1-15 to S1-19) of storing information as to the created mail message, the information including whether the created mail message demands a reply or not;
a transmitting process (S1-20 to S1-23) of transmitting the created mail message;
a receiving process (S3-1 to S3-2) of receiving a mail message from an external apparatus;
a checking process (S3-3 to S3-4) of checking whether the received mail message is a reply to a mail message that demands a reply; and
a second storing process (S3-5 to S3-6) of storing, when the received mail message is a reply to a mail message that demands a reply, a fact that there has been a reply to the mail message that demands a reply.

14. A recording medium as claimed in claim 13, the program further including:
a displaying process (S2-2) of displaying a list of mail messages of which information has been stored in the first storing process together with information, for each mail message, as to whether the mail message demands a reply or not and, when the mail message demands a reply, whether there has been a reply thereto or not.

15. A recording medium (15) on which a program for an electronic mail processing apparatus for processing electronic mail transmitted and received by way of a communications network is recorded, the program including:
an editing process (S1-5 to S1-14) of creating a mail message;
a storing process (S1-15 to S1-19) of storing the created mail message;
a first transmitting process (S1-20 to S1-23) of transmitting the stored mail message and storing a fact that the mail message has been transmitted;
a checking process (S4-2 to S4-7) of checking whether or not there is a mail message that has not yet been transmitted among stored mail messages;
a warning process (S4-5) of, when there is a mail message that has not yet been transmitted among the stored mail messages, displaying a warning indicating that there is a mail message that has not yet been transmitted; and
a second transmitting process (S4-11 to S4-13) of transmitting a mail message that has been recognized by a user as not having been transmitted yet and storing a fact that the mail message has been transmitted.

16. An electronic mail processing apparatus comprising means for carrying out the steps of the method according to any one of claims 10 to 12.

17. A computer program for causing an electronic mail processing apparatus to carry out the steps of the method according to any one of claims 10 to 12.
